# EUROPÄISCHE PATENTSCHRIFT

(11) **EP 1 226 044 B1**
(45) Veröffentlichungstag und Bekanntmachung des Hinweises auf die Patenterteilung: **06.08.2003**
(21) Anmeldenummer: 01978293.7
(22) Anmeldetag: 22.08.2001
(51) Int. Cl.: B60J 7/12

(54) **ZWISCHEN EINER SCHLIESSPOSITION UND EINER ABLAGEPOSITION VERSTELLBARES FALTVERDECK FÜR EIN FAHRZEUG**
CABRIOLET TOP OF A VEHICLE WHICH CAN BE ADJUSTED BETWEEN A CLOSED POSITION AND A STORED POSITION
CAPOTE DE VEHICULE POUVANT PASSER D'UNE POSITION FERMEE A UNE POSITION PLAGE ARRIERE

(30) Priorität: 30.08.2000 DE 10042417
(43) Veröffentlichungstag der Anmeldung: 31.07.2002
(73) Patentinhaber: CTS Fahrzeug-Dachsysteme GmbH, 21079 Hamburg (DE)
(72) Erfinder: HALBWEISS, Thomas, D-71686 Remseck (DE); WEZYK, Wojciech, D-71065 Sindelfingen (DE)
(74) Vertreter: Müller, Gottfried
(86) Internationale Anmeldenummer: EP0109674
(87) Internationale Veröffentlichungsnummer: WO02018164

(56) Entgegenhaltungen:
- DE-C- 19 852 615
- US-A- 3 159 422
- US-A- 3 473 842

## Beschreibung

Die Erfindung bezieht sich auf ein zwischen einer Schließposition und einer Ablageposition verstellbares Faltverdeck für ein Fahrzeug nach dem Oberbegriff des Anspruches 1.

Ein derartiges Faltverdeck ist aus der Druckschrift DE-PS 943 747 bekannt. Das Faltverdeck umfasst ein Verdeckgestänge, bestehend aus einer Mehrzahl untereinander kinematisch gekoppelter Gestängeteile, und einen vom Verdeckgestänge getragenen Verdeckbezugsstoff, der in Schließposition des Fahrzeugdaches den Fahrzeuginnenraum überspannt und in Ablageposition gemeinsam mit dem Verdeckgestänge in einem Stauraum hinter dem Fahrzeuginnenraum abgelegt ist.

Dem Verdeckgestänge ist ein Seitenbügel zugeordnet, der sich in Schließposition in Fahrzeuglängsrichtung erstreckt und eine Seitenscheibe des Fahrzeugs umgreift. Um ein kompaktes Staumaß zu erreichen, ist der Seitenbügel über eine Drehgelenkanordnung, die aus einem ersten, fahrzeugseitigen Drehgelenk und einem zweiten, auf dem ersten Drehgelenk aufsitzenden Relativgelenk besteht, bei der Überführung von Schließ- in Ablageposition um zwei Achsen sowohl entgegen der Fahrzeuglängsrichtung nach hinten als auch in Richtung der Fahrzeuginnenseite verschwenkbar. Die Schwenkbewegungen um die Achsen des fahrzeugfesten Drehgelenks und des Relativgelenks sind kinematisch über miteinander kämmende Kegelräder gekoppelt.

Zur Verstellung des Faltverdecks zwischen Schließ- und Ablageposition ist ein Aktuator vorgesehen, der über einen Hebel an einem Drehgelenk der Dachkinematik angreift, wobei die Drehgelenkbewegung auf die Kegelräder weitergeleitet wird. Eine Kraftumleitung über die Kegelräder setzt aufgrund des schlechten Hebelverhältnisses eine enorm hohe Stellkraft voraus, welche einen entsprechend groß dimensionierten Antrieb erfordert und außerdem Verschleiß und daraus resultierendes Gelenkspiel und eine dementsprechend ungenaue und nicht eindeutig definierte kinematische Bewegung des Faltverdecks hervorruft.

Der Erfindung liegt das Problem zugrunde, ein Faltverdeck für ein Fahrzeug zu schaffen, das sich durch ein kompaktes Ablagemaß auszeichnet und mit einfachen konstruktiven Maßnahmen und mit geringen Stellkräften zuverlässig zwischen Schließ- und Ablageposition zu verstellen ist.

Dieses Problem wird erfindungsgemäß mit den Merkmalen des Anspruches 1 gelöst. Die Unteransprüche geben zweckmäßige Weiterbildungen an.

Das erfindungsgemäße Faltverdeck weist ein Stellelement auf, das in einem fahrzeugfesten Lager schwenkbar aufgenommen ist und lediglich einen einzigen Kopplungspunkt zu einem Bauteil des Seitenbügels aufweist, nämlich mit dem Relativgelenk verbunden ist, welches auf dem fahrzeugseitigen Drehgelenk des Seitenbügels aufsitzt und relativ zu diesem Gelenk verschwenkbar ist. Der Kopplungspunkt zwischen Stellelement und Relativgelenk liegt mit Abstand zur Drehachse sowohl des Relativgelenks als auch zur Drehachse des fahrzeugseitigen Drehgelenks des Seitenbügels. Aufgrund des Abstandes zu den jeweiligen Drehachsen ist über nur ein Stellelement, welches von einem Stellantrieb beaufschlagt wird, mit verhältnismäßig geringen Stellkräften ein das Fahrzeugdach zwischen Schließ- und Ablageposition überführendes Schwenkmoment sowohl um die Drehachse des Relativgelenks als auch um die Drehachse des fahrzeugseitigen Drehgelenks aufzubringen.

Für die Überführung des Faltverdecks zwischen Schließ- und Ablageposition genügt eine Drehung des Stellelements um ausschließlich eine Drehachse, die beispielsweise über einen Linearantrieb erzeugt werden kann. Die Drehung des Stellelements mit nur einem Freiheitsgrad wird durch die Kopplung mit der Drehgelenkanordnung des Seitenbügels, bestehend aus insgesamt zwei Drehgelenken, in eine räumliche Schwenkbewegung des Seitenbügels um insgesamt zwei Drehachsen umgesetzt. Über eine Kopplung des Seitenbügels mit weiteren Gestängeteilen des Verdeckgestänges sowie mit dem Verdeckbezugsstoff ist eine Überführung des gesamten Faltverdecks mit jeweils einem Stellelement an jeder Seite des Fahrzeugdaches möglich.

Das Stellelement ist drehbar mit dem Relativgelenk verbunden, wobei die Drehachse im Kopplungspunkt zwischen Stellelement und Relativgelenk vorteilhaft mit der Drehachse des Relativgelenks einen Winkel einschließt, der kleiner ist als 60°; gegebenenfalls liegen die Drehachsen auch parallel zueinander. In diese Ausführung können das Stellelement und der der Drehgelenkanordnung zugewandte Endabschnitt des Seitenbügels näherungsweise parallel zueinander angeordnet sein bzw. einen nur geringen Winkel einschließen, wodurch eine platzsparende Anordnung erreicht wird.

Zweckmäßig sind sowohl das Lager des Stellelements als auch das Drehlager des Seitenbügeis in einem gemeinsamen, fahrzeugfesten Lagerbock aufgenommen, wobei insbesondere das Lager des Stellelements auf der dem Fahrzeuginnenraum abgewandten Außenseite des Lagers angeordnet ist, um eine Beeinträchtigung der Bewegung des Seitenbügels bei der Überführung von Schließ- zur Ablageposition zu verhindern. Zugleich wird eine kompakte Bauform erzielt, da das Lager des Stellelements und das Drehlager des Seitenbügels einen gemeinsamen Lagerbock nutzen.

Dem Stellelement ist bevorzugt ein Stellelement-Antrieb zugeordnet, welcher etwa waagrecht im Fahrzeug angeordnet ist und beispielsweise als hydraulischer Antrieb, gegebenenfalls aber auch als pneumatischer oder elektrischer Antrieb ausgebildet sein kann. Der Antrieb beaufschlagt einen Schenkel des Stellelements mit einer Antriebskraft, die eine Bewegung des Stellelements sowie der gesamten Dachkinematik auslöst. In Ablageposition des Fahrzeugdachs liegen Antrieb und Stellelement vorteilhaft etwa parallel zueinander, so dass ein geringes Staumaß erreicht wird. In Schließposition schließen die Achsen von Antrieb und Stellelement bevorzugt etwa einen 90°-Winkel ein, wodurch ein optimales Hebelverhältnis für die Erzeugung eines das Fahrzeugdach von Schließ- und Ablageposition verstellendes Schwenkmomentes erreicht wird.

Der Kopplungspunkt zwischen dem Stellelement und dem Relativgelenk liegt zweckmäßig auf der dem Fahrzeuginnenraum zugewandten Seite der Gelenkanordnung, so dass keine die Fahrzeugverkleidung beeinflussende, bauliche Maßnahmen für die Integration des Stellelements in das Fahrzeug erforderlich sind.

Ausführungsbeispiele der Erfindung sind in den Figuren dargestellt und werden im folgenden beschrieben. Es zeigen:
- Fig. 1: eine perspektivische Ansicht eines verstellbaren Fahrzeugdaches, dessen Seitenbügel in einer Drehgelenkanordnung aufgenommen ist und zwischen Schließund Ablageposition eine räumliche Schwenkbewegung ausführt,
- Fig. 2: eine vergrößerte Darstellung der Drehgelenkanordnung für den Seitenbügel einschließlich eines Stellelements und eines Stellelement-Antriebs für die Betätigung des Seitenbügels,
- Fig. 3: eine perspektivische Ansicht auf ein Fahrzeugdach in einer geringfügig modifizierten Ausführung, dargestellt mit Seitenbügeln in Schließposition, in einer Zwischenposition und in Ablageposition,
- Fig. 4: ein Ausschnitt aus dem Fahrzeugdach, dargestellt in Ablageposition.

In den folgenden Figuren sind gleiche Bauteile mit gleichen Bezugszeichen versehen.

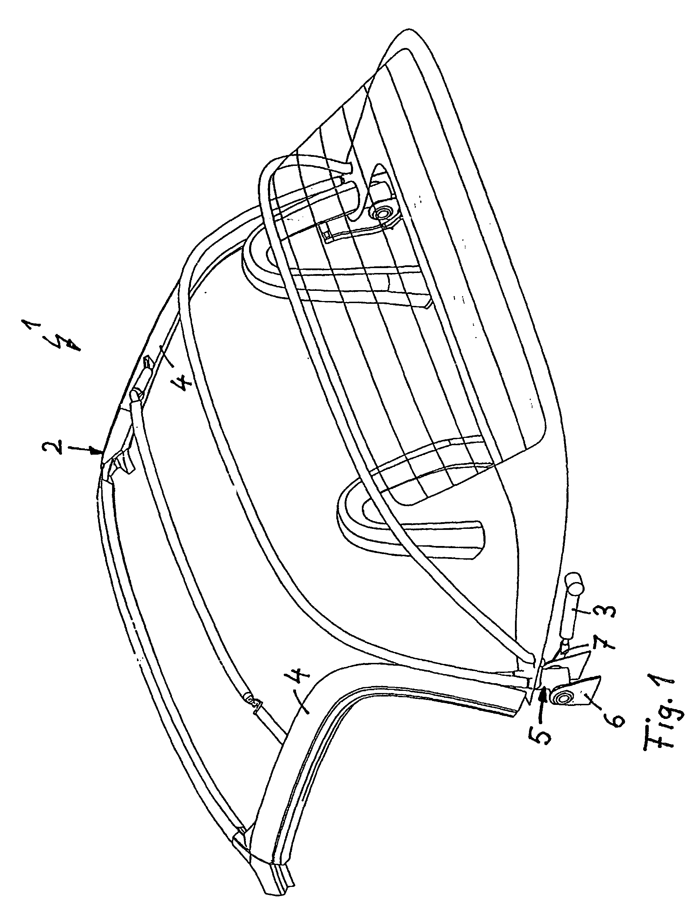

Das in Fig. 1 dargestellte Fahrzeugdach 1 ist zwischen der gezeigten Schließposition, in der der Fahrzeuginnenraum überdeckt ist, und einer den Fahrzeuginnenraum freigebenden Ablageposition verstellbar, in der das Fahrzeugdach in einem Stauraum hinter dem Fahrzeuginnenraum abgelegt ist. Das Fahrzeugdach 1 ist als Softtop ausgeführt und umfasst ein Verdeckgestänge 2 sowie einen vom Verdeckgestänge 2 getragenen Verdeckbezugsstoff. Das Verdeckgestänge 2 besteht aus einer Mehrzahl kinematisch verbundener Gestängeteile, die sich in Schließposition in Längs- bzw. Querrichtung des Fahrzeugs erstrecken und die über Gelenkanordnungen untereinander bzw. gegenüber der Fahrzeugkarosserie beweglich gelagert sind. Das Verdeckgestänge 2 ist einschließlich dem Bezugsstoff mit Hilfe eines Stellantriebs 3 automatisch zwischen der Schließ- und Ablageposition zu verstellen.

Das Verdeckgestänge 2 umfasst Seitenbügel 4, die sich in Schließposition des Fahrzeugdaches 1 in Längsrichtung erstrecken und Seitenfenster des Fahrzeuges umgreifen. Die Seitenbügel 4 sind jeweils in einer Drehgelenkanordnung 5 aufgenommen, die in einem Lagerbock 6 am Fahrzeug gehalten ist. Auch ein Stellelement 7, welches vom Stellantrieb 3 beaufschlagt wird und eine Stellbewegung auf den Seitenbügel 4 überträgt, ist am Lagerbock 6 gehalten.

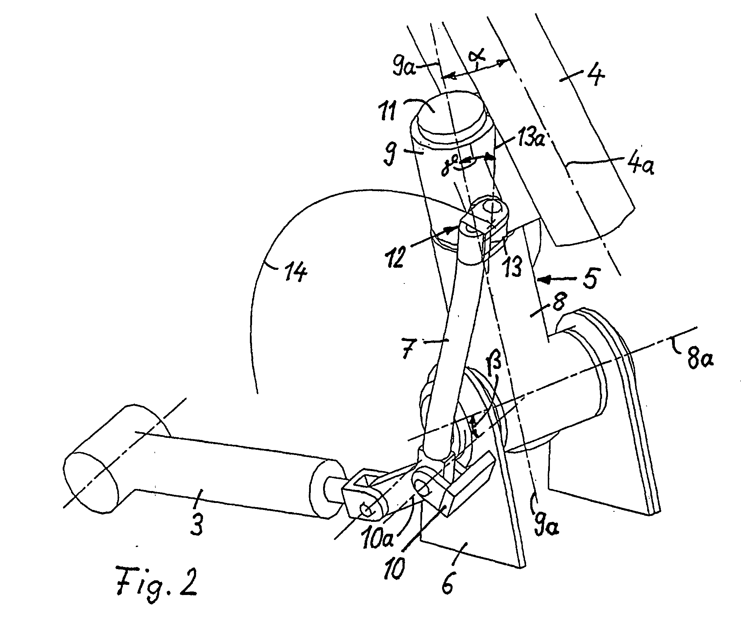

Wie Fig. 2 zu entnehmen, besteht die den Seitenbügel 4 aufnehmende Drehgelenkanordnung 5 aus einem fahrzeugfest gehaltenen Drehgelenk 8 und einem Relativgelenk 9, welches am Drehgelenk 8 gelagert und gegenüber diesem verschwenkbar ausgebildet ist. Der Seitenbügel 4 ist drehfest mit dem Relativgelenk 9 verbunden. Das fahrzeugseitige Drehgelenk 8 ist in dem Lagerbock 6 des Fahrzeugs aufgenommen.

Die Drehachse 9a des Relativgelenks 9, welches drehbar auf dem Drehgelenk 8 aufsitzt, erstreckt sich lotrecht zur Drehachse 8a des Drehgelenks 8. Der Seitenbügel 4 kann eine räumliche Schwenkbewegung um die fahrzeugfeste Drehachse 8a des Drehgelenks 8 und um die Drehachse 9a des Relativgelenks 9 ausführen.

Das Relativgelenk 9 ist als Drehhülse ausgebildet, die auf einem Gelenkzapfen 11 des Drehgelenks 8 aufsitzt. Der axiale Endabschnitt des Seitenbügels 4 ist fest mit dem Relativgelenk 9 verbunden, wobei die Bügelachse 4a im Endabschnitt des Seitenbügels 4 mit der Drehachse 9a des Relativgelenks 9 einen Winkel α einschließt, der etwa 30° beträgt und bevorzugt in einem Bereich kleiner als 45° liegt.

Die Drehbewegungen um die Drehachse 8a des Drehgelenks 8 und die Drehachse 9a des Relativgelenks 9 bei der Überführungsbewegung des Fahrzeugdaches zwischen Schließ- und Ablageposition werden kinematisch über das Stellelement 7 gekoppelt, welches ebenfalls am Lagerbock 6 in einem Lager 10 drehbar aufgenommen ist. Die Drehachse 10a des Lagers 10 für das Stellelement 7 schließt mit der Drehachse 8a des Drehgelenks 8 des Seitenbügels 4 einen Winkel β von etwa 30° ein; auch der Winkel β liegt bevorzugt in einem Winkelbereich kleiner als 45°.

Das Stellelement 7 weist einen über das Lager 10 hinausragenden unteren Abschnitt auf, welcher von dem Stellantrieb 3, der etwa waagrecht im Fahrzeug angeordnet ist und als Linearantrieb ausgebildet ist, beaufschlagt wird, woraufhin das Stellelement 7 eine Drehbewegung um die Drehachse 10a seines Lagers 10 ausführt. Das Stellelement 7 ist auf seiner dem Stellantrieb 3 abgewandten Seite mit dem Relativgelenk 9 verbunden. Im Koppelpunkt 12 zwischen Stellelement 7 und Relativgelenk 9 befindet sich ein weiteres Drehgelenk 13, über das eine Relativdrehung des Stellelements 7 gegenüber dem Relativgelenk 9 um die Drehachse 13a des Drehgelenks ermöglicht wird. Der Winkel γ zwischen der Drehachse 13a und der Drehachse 9a des Relativgelenks 9 liegt bei etwa 20°; der Winkel γ liegt bevorzugt in einem Winkelbereich kleiner als 45°. Die Drehachse 13a des Drehgelenks 13 verläuft näherungsweise parallel zur Längsachse des Stellelements 7.

Das Stellelement 7 ist lediglich mit dem Relativgelenk 9, nicht jedoch mit dem Drehgelenk 8 verbunden. Aufgrund der räumlichen Anordnung von Stellelement und den Gelenken der Drehgelenkanordnung 5 wird jedoch bei einer Beaufschlagung des Stellelements 7 über den Stellantrieb 3 und einer dadurch hervorgerufenen kreisförmigen Bewegung des Koppelpunktes 12 auf der Kreisbahn 14 zum einen der Seitenbügel 4 eine Relativdrehung um die Drehachse 9a des Relativgelenkes 9 ausführen, zum anderen aber auch eine Drehbewegung um die Drehachse 8a des fahrzeugseitigen Drehgelenkes 8 ausüben. Über das Stellelement 7 besteht somit eine kinematische Kopplung der Drehbewegungen des Relativgelenks 9 und des Drehgelenks 8. Der Seitenbügel 4 wird daher bei einer Beaufschlagung über den Stellantrieb 3 und das Stellelement 7 eine räumliche Schwenkbewegung um beide Drehachsen der Gelenke 8 und 9 ausführen.

Der Koppelpunkt 12 zwischen dem Stellelement 7 und'dem Relativgelenk 9 weist sowohl einen Abstand zur Drehachse 9a des Relativgelenks 9 als auch einen Abstand zur Drehachse 8a des Drehgelenks 8 auf. Bei einer Schwenkbewegung des Stellelements 7, ausgelöst durch eine Beaufschlagung über den Stellantrieb 3, wird daher sowohl ein Schwenkmoment um die Drehachse 8a als auch ein Schwenkmoment um die Drehachse 9a erzeugt.

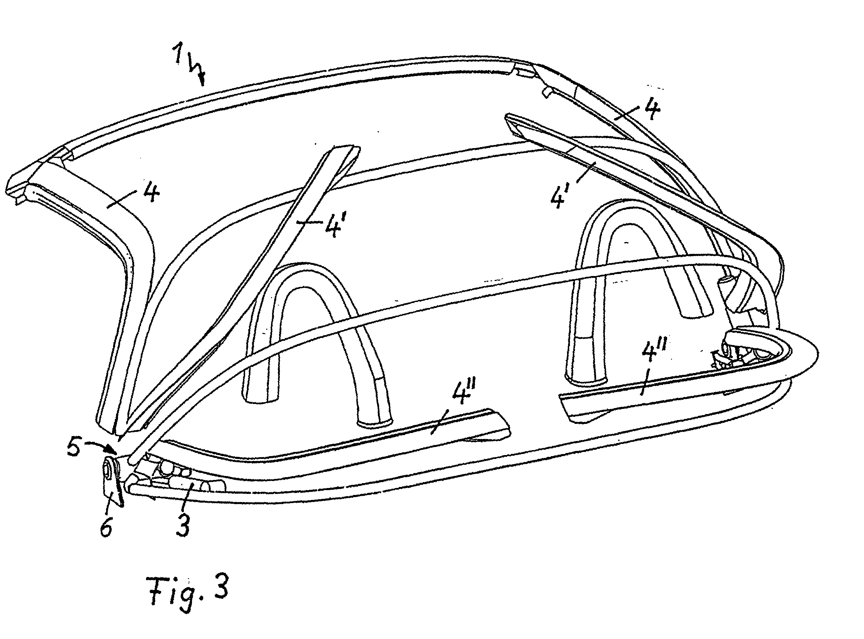

Fig. 3 zeigt ein Fahrzeugdach 1 mit Seitenbügeln 4 in Schließstellung, in einer Zwischenposition zwischen Schließ- und Ablagestellung (mit 4' bezeichnet) sowie in Schließstellung (mit 4'' bezeichnet). In Ablagestellung ist der Seitenbügel 4, welcher aus zwei Bügelabschnitten in einem 90°-Winkel zusammengesetzt ist, mit denen eine Seitenscheibe übergriffen werden kann, sowohl nach hinten als auch nach innen in Richtung des Fahrzeuginnenraums abgelegt. Diese zweifache Schwenkbewegung wird durch eine kombinierte Drehung um beide Gelenke der Drehanordnung 5 erzielt.

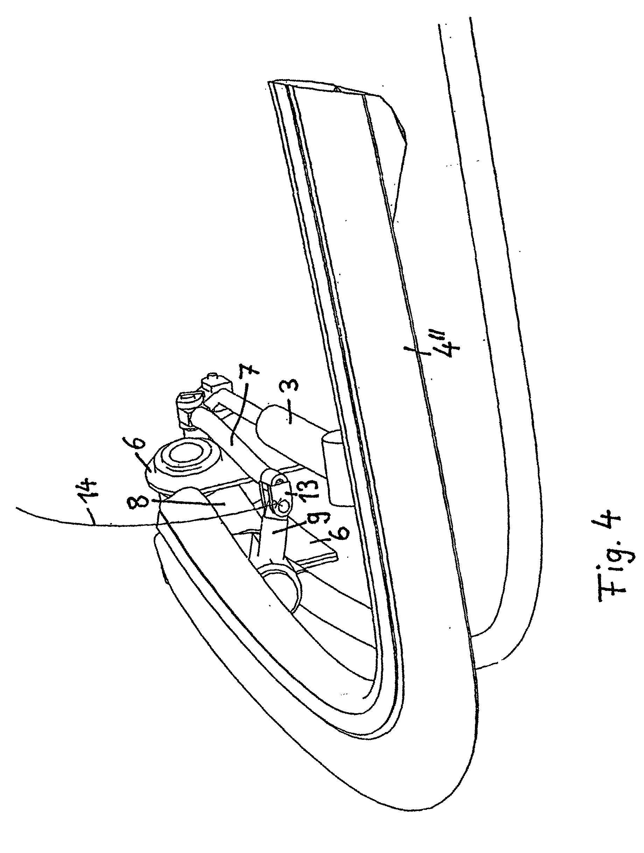

Wie der Ansicht gemäß Fig. 4 zu entnehmen, liegen in Ablagestellung der Stellantrieb 3, das Stellelement 7, das Drehgelenk 8 sowie der Seitenbügel 4'' näherungsweise parallel zueinander. Es wird hierdurch ein kompaktes Staumaß erzielt.

## Patentansprüche

1. Zwischen einer Schließposition und einer Ablageposition verstellbares Faltverdeck für ein Fahrzeug, das ein Verdeckgestänge (2) und einen vom Verdeckgestänge (2) getragenen Verdeckbezugstoff umfasst, wobei ein Seitenbügel (4) des Verdeckgestänges (2) in einem Relativgelenk (9) aufgenommen ist, das relativ zu einem fahrzeugfest angeordneten Drehgelenk (8) verschwenkbar ist, wobei die Drehachsen (8a und 9a) des Drehgelenks (8) und des Relativgelenks (9) winklig zueinander ausgerichtet und die Schwenkbewegungen um die Drehachsen (8a und 9a) der Gelenke (8 und 9) kinematisch gekoppelt sind, mit einem Stellelement (7), das in einem fahrzeugfesten Lager (10) schwenkbar gelagert ist und das Drehgelenk (8) beaufschlagt,
**dadurch gekennzeichnet,**
**dass** das Stellelement (7) drehbar mit dem Relativgelenk (9) gekoppelt ist, wobei der Kopplungspunkt (12) zwischen Stellelement (7) und Relativgelenk (9) mit Abstand zur Drehachse (9a) des Relativgelenks (9) und außerdem mit Abstand zur Drehachse (8a) des fahrzeugfesten Drehgelenks (8) liegt.

2. Faltverdeck nach Anspruch 1,
**dadurch gekennzeichnet,**
**dass** die Lagerachse (10a) des Lagers (10) des Stellelements (7) winklig zur fahrzeugfesten Drehachse (8a) des Drehgelenks (8) angeordnet ist.

3. Faltverdeck nach Anspruch 1 oder 2,
**dadurch gekennzeichnet,**
**dass** die Drehachse (13a) im Kopplungspunkt (12) des Stellelements (7) zum Relativgelenk (9) mit der Drehachse (9a) des Relativgelenks (9) einen Winkel (γ) kleiner als 45°einschließt.

4. Faltverdeck nach einem der Ansprüche 1 bis 3,
**dadurch gekennzeichnet,**
**dass** das Lager (10) des Stellelements (7) und das Drehgelenk (8) des Seitenbügels (4) in einem gemeinsamen Lagerbock (6) aufgenommen sind.

5. Faltverdeck nach einem der Ansprüche 1 bis 4,
**dadurch gekennzeichnet,**
**dass** ein waagrecht im Fahrzeug angeordneter Stellantrieb (3) zur Beaufschlagung des Stellelements (7) vorgesehen ist.

6. Faltverdeck nach einem der Ansprüche 1 bis 5,
**dadurch gekennzeichnet,**
**dass** in Ablageposition ein Stellantrieb (3) und das Stellelement (7) parallel zueinander abgelegt sind.

7. Faltverdeck nach einem der Ansprüche 1 bis 6,
**dadurch gekennzeichnet,**
**dass** der Kopplungspunkt (12) des Stellelements (7) zum Relativgelenk (9) auf der dem Fahrzeuginnenraum zugewandten Innenseite des Lagerbocks (6) liegt.

## Claims

1. Folding top for a vehicle, the folding top being adjustable between a closed position and a storage position and comprising a folding-top linkage (2) and a folding-top fabric which is supported by the folding-top linkage (2), a side bracket (4) of the folding-top linkage (2) being held in a relative joint (9) which can be pivoted relative to a rotational joint (8) arranged in a manner such that it is fixed on the vehicle, the axes of rotation (8a and 9a) of the rotational joint (8) and of the relative joint (9) being aligned at an angle to each other and the pivoting movements about the axes of rotation (8a and 9a) of the joints (8 and 9) being coupled kinematically, with an adjusting element (7) which is mounted pivotably in a bearing (10) fixed on the vehicle and acts upon the rotational joint (8), **characterized in that** the adjusting element (7) is coupled rotatably to the relative joint (9), the coupling point (12) between the adjusting element (7) and relative joint (9) lying at a distance from the axis of rotation (9a) of the relative joint (9) and also at a distance from the axis of rotation (8a) of the rotational joint (8) fixed on the vehicle.

2. Folding top according to Claim 1, **characterized in that** the bearing axis (10a) of the bearing (10) of the adjusting element (7) is arranged at an angle to the axis of rotation (8a) of the rotational joint (8) which is fixed on the vehicle.

3. Folding top according to Claim 1 or 2, **characterized in that** the axis of rotation (13a) in the coupling point (12) of the adjusting element (7) to the relative joint (9) encloses an angle (γ) of smaller than 45° with the axis of rotation (9a) of the relative joint (9).

4. Folding top according to one of Claims 1 to 3, **characterized in that** the bearing (10) of the adjusting element (7) and the rotational joint (8) of the side bracket (4) are accommodated in a common bearing bracket (6).

5. Folding top according to one of Claims 1 to 4, **characterized in that** an actuating drive (3) which is arranged horizontally in the vehicle and is intended for acting upon the adjusting element (7) is provided.

6. Folding top according to one of Claims 1 to 5, **characterized in that** an actuating drive (3) and the adjusting element (7) are stored parallel to each other in the storage position.

7. Folding top according to one of Claims 1 to 6, **characterized in that** the coupling point (12) of the adjusting element (7) to the relative joint (9) lies on that inner side of the bearing bracket (6) which faces the vehicle interior.

## Revendications

1. Capote pour un véhicule, apte à être déplacée entre une position de fermeture et une position de rangement, qui comprend une tringlerie de capote (2) et un matériau de recouvrement de capote porté par la tringlerie de capote (2), un étrier latéral (4) de la tringlerie de capote (2) étant reçu dans une articulation relative (9) qui peut pivoter par rapport à une articulation dé rotation (8) fixée au véhicule, les axes de rotation (8a et 9a) de l'articulation de rotation (8) et de l'articulation relative (9) formant un angle l'un par rapport à l'autre et les déplacements de pivotement autour des axes de rotation (8a et 9a) des articulations (8 et 9) étant couplés cinématiquement, et avec un élément d'actionnement (7) qui est monté à pivotement dans un palier (10) fixé au véhicule et qui sollicite l'articulation de rotation (8),
**caractérisée en ce que**
l'élément d'actionnement (7) est'couplé à rotation avec l'articulation relative (9), le point d'accouplement (12) entre l'élément d'actionnement (7) et l'articulation relative (9) étant situé à distance de l'axe de rotation (9a) de l'articulation relative (9) et en outre à distance par rapport à l'axe de rotation (8a) de l'articulation de rotation (8) fixée au véhicule.

2. Capote selon la revendication 1, **caractérisée en ce que** l'axe de palier (10a) du palier (10) de l'élément d'actionnement (7) est disposé obliquement par rapport à l'axe de rotation (8a) de l'articulation de rotation (8) fixée au véhicule.

3. Capote selon la revendication 1 ou 2, **caractérisée en ce que** l'axe de rotation (13a) du point d'accouplement (12) de l'élément d'actionnement (7) à l'articulation relative (9) forme avec l'axe de rotation (9a) de l'articulation relative (9) un angle (γ) inférieure à 45°.

4. Capote selon l'une des revendications 1 à 3, **caractérisée en ce que** le palier (10) de l'élément d'actionnement (7) et l'articulation de rotation (8) de l'étrier latéral (4) sont reçus dans un chevalet de palier (6) commun.

5. Capote selon l'une des revendications 1 à 4, **caractérisée en ce qu'**un entraînement d'actionnement (3) disposé horizontalement dans le véhicule est prévu pour solliciter l'élément d'actionnement (7).

6. Capote selon l'une des revendications 1 à 5, **caractérisée en ce que** dans la position de rangement, un entraînement d'accouplement (3) et l'élément d'actionnement (7) sont rangés parallèlement l'un à l'autre.

7. Capote selon l'une des revendications 1 à 6, **caractérisée en ce que** le point d'accouplement (12) entre l'élément d'actionnement (7) et l'articulation relative (9) est situé sur le côté intérieur du chevalet de palier (6), situé du côté de l'habitacle du véhicule.
